(19) **Europäisches Patentamt / European Patent Office / Office européen des brevets**

(11) **EP 1 708 173 B1**

(12) **EUROPEAN PATENT SPECIFICATION**

(45) Date of publication and mention
of the grant of the patent:
**10.09.2008 Bulletin 2008/37**

(51) Int Cl.:
***G10L 19/02*** (2006.01) ***H04B 1/66*** (2006.01)

(21) Application number: **06006581.0**

(22) Date of filing: **29.03.2006**

(54) **Method and apparatus for coding audio signal**

Verfahren und Vorrichtung zur Kodierung von Tonsignalen

Procédé et appareil pour coder un signal audio

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.03.2005 KR 20050027029**

(43) Date of publication of application:
**04.10.2006 Bulletin 2006/40**

(73) Proprietors:
• **LG Electronics Inc.
Seoul 150-010 (KR)**
• **Industry-Academic Cooperation Foundation, Yonsei University
Seodaemun-gu
Seoul (KR)**

(72) Inventors:
• **Kang, Tae Ik
Anyang-si
Gyeonggi-do (KR)**
• **Choi, Jin Kyu
Dobong-gu
Seoul (KR)**
• **Lee, Keun Sup
Songpa-gu
Seoul (KR)**
• **Park, Young Cheol
Wonju-si
Gangwon-do (KR)**
• **Youn, Dae Hee
Eunpyeong-gu
Seoul (KR)**

(74) Representative: **Katérle, Axel
Wuesthoff & Wuesthoff
Patent- und Rechtsanwälte
Schweigerstraße 2
81541 München (DE)**

(56) References cited:
**US-A1- 2004 088 160**

• **MATHEW M ET AL: "Modified mp3 encoder using complex modified discrete cosine transform" MULTIMEDIA AND EXPO, 2003. PROCEEDINGS. 2003 INTERNATIONAL CONFERENCE ON 6-9 JULY 2003, PISCATAWAY, NJ, USA,IEEE, vol. 2, 6 July 2003 (2003-07-06), pages 709-712, XP010650570 ISBN: 0-7803-7965-9**
• **IVAN DIMKOVIC: "IMPROVED ISO AAC CODER" 10 June 2004 (2004-06-10), XP002357088 Retrieved from the Internet: URL:http://www.mp3-tech.org/programmer/docs/di042001.pdf>**
• **CH J LEE, K S LEE, Y CH PARK, D H YOUN: "Adaptive FFT Window Switching for Psychoacoustic Model in MPEG-4 AAC" DOMESTIC CONFERENCE PROCEEDINGS, vol. 31, July 2005 (2005-07), page 533, XP002384408 Yonsei University, Korea**
• **BO SIM ET AL: "ISO/IEC MPEG-2 Advanced Audio Coding" JOURNAL OF THE AUDIO ENGINEERING SOCIETY, AUDIO ENGINEERING SOCIETY, NEW YORK, NY, US, vol. 45, no. 10, October 1997 (1997-10), pages 789-814, XP002326353 ISSN: 1549-4950**

**Description**

## BACKGROUND OF THE INVENTION

### Field of the Invention

The present invention relates to a method and apparatus for coding an audio signal, and more particularly to a method and apparatus for coding an audio signal to increase process efficiency of a Moving Picture Expert Group-4 Advanced Audio Coding (MPEG-4 AAC) scheme.

### Description of the Related Art

A Moving Picture Expert Group (MPEG) audio standard plays an important role in the storage and transmission of audio signals in a system capable of providing multimedia services, such as a Digital Audio Broadcasting (DAB) service, an Internet phone service or an Audio On Demand (AOD) service. An MPEG audio coding algorithm based on an MPEG audio standard is used to compress audio signals without losing subjective sound quality so as to reduce the channel capacity required for storing and transmitting the audio signals.

Among a plurality of MPEG audio coding algorithms, MPEG-4 AAC (Moving Picture Group-4 Advanced Audio Coding) scheme is the latest such systemized coding scheme and supports the highest compression rate and the best sound quality. Audio compression technique have been rapidly developed according to this MPEG scheme.

Psychoacoustic theory capable of effectively removing noise using human auditory characteristics has made great contributions to the rapid development of audio compression techniques. During the audio coding process, a maximum allowable noise amount for each frequency is calculated according to the complicated Psychoacoustic theory process.

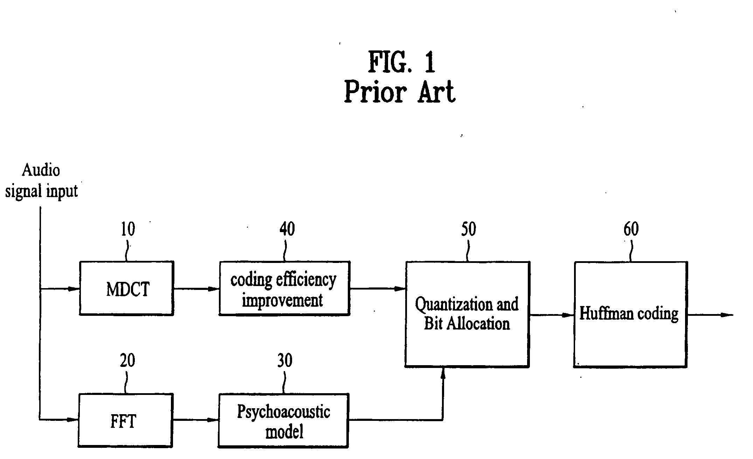

FIG. 1 is a block diagram illustrating a conventional audio coding apparatus for coding audio signals. Specifically, FIG. 1 illustrates an apparatus recommended in ISO/IEC 14496-3, which is indicative of the standard technique associated with the MPEG-4 AAC. As illustrated in FIG. 1, the conventional audio coding apparatus includes a Modified Discrete Cosine Transform (MDCT) block 10, a Fast Fourier Transform (FFT) block 20, a Psychoacoustic model block 30, a coding efficiency improvement block 40, a Quantization and Bit Allocation block 50, and a Huffman coding block 60.

The MDCT block 10 receives a time-domain signal and transforms the received signal into a frequency-domain signal in a coding process. The FFT block 20 receives an audio signal, performs an FFT process on the received audio signal, and outputs transform coefficients. The coding efficiency improvement block 40 improves coding (i.e., compression) efficiency associated with signal characteristics using a plurality of methods, such as, a Temporal Noise Shaping (TNS), a Joint Stereo, a Long Term Prediction (LTP) for improving a compression performance associated with periodic signals and Perceptual Noise Suppression (PNS) for improving compression efficiency associated with a noise component. It should be noted that the above-mentioned components contained in the coding efficiency improvement block 40 have been defined in the MPEG-4 AAC standard.

The Psychoacoustic model block 30 analyzes perceptual characteristics of the audio signal and determines a maximum allowable quantization noise amount for each frequency of the analyzed audio signal. The Psychoacoustic model block 30 uses coefficients received from the FFT block 20.

The Quantization and Bit Allocation block 50 performs quantization and bit allocation on the received signals. The quantization process minimizes an amount of noise perceived by a human being in consideration of both an SNR (Signal-to-Noise Ratio) associated with an output signal of the coding efficiency improvement block 40 and an output value of the Psychoacoustic model block 30. Additionally, bit allocation is optimized, such that the SNR associated with the output signal of the coding efficiency improvement block 40 is less than the maximum allowable quantization noise amount of the output value of the Psychoacoustic model block 30 according to the optimized bit allocation. It should be noted that constituent components of the above-mentioned quantization and bit allocation block 50 have been defined in the MPEG-4 AAC standard.

It is well known to those skilled in the art that the Huffman coding block 60 allows the output signal of the above-mentioned Quantization and Bit Allocation block 50 to be coded without any loss. At the same time, the Psychoacoustic model block 30 analyzes perceptual characteristics of the audio signal transformed into the frequency-domain signal, such that it requires a specific process for transforming the input audio signal into the frequency-domain signal.

Specifically, the current MPEG recommendation has defined the necessity of an additional FFT for use in the Psychoacoustic model. As illustrated in FIG. 1, the conventional audio coding apparatus contains FFT block 20.

However, among the number of calculations performed in the blocks in the conventional apparatus illustrated in FIG. 1 and, specifically among the number of calculations performed in each block according to the MPEG-4 AAC algorithm, the Psychoacoustic model process makes up for about one half of the calculations. Specifically, the FFT of Psychoacoustic model process requires many calculations.

If a low-speed processor is used, the MPEG-4 AAC algorithm required for the conventional approach cannot be driven in real time. On the other hand, if a high-performance processor having a high-calculation performance is used, the MPEG-4 AAC algorithm can be driven in real time. However, a high-performance processor has disadvantageous power-consumption.

An article entitled "Modified MP3 Encoder using Complex Modified Discrete Cosine Transform" by Manu Mathew et al., ICME 2003, pages II-709 to II-712, describes the use of CMDCT for computing the spectrum of an input audio signal in the MPEG-1 Layer-3 encoder. The CMDCT spectrum is re-sampled and then supplied to a psychoacoustic model which determines the ratio of signal energy to the masking threshold for each sub-band.

It is an object of the present invention to provide an audio coding apparatus and method capable of reducing the number of calculations.

## SUMMARY OF THE INVENTION

The present invention is directed to an audio coding method and apparatus as specified in claims 4 and 1, respectively. The audio coding method and apparatus achieve to reduce the number of calculations of an audio coding algorithm in order to improve efficiency of an audio coding process and further achieve to reduce the number of calculations required for a Psychoacoustic model process of an MPEG-4 AAC algorithm capable of coding an audio signal.

## BRIEF DESCRIPTION OF THE DRAWINGS

The accompanying drawings, which are included to provide a further understanding of the invention, illustrate embodiments of the invention and together with the description serve to explain the principles of the invention.
FIG. 1 is a block diagram illustrating a conventional audio coding apparatus.
FIG. 2 is a block diagram illustrating an audio coding apparatus in accordance with a one embodiment of the present invention.
FIG. 3 is a flow chart illustrating a Psychoacoustic model process capable of coding an audio signal according to one embodiment of the present invention.

## DETAILED DESCRIPTION OF THE PREFERRED EMBODIMENTS

Reference will now be made in detail to the preferred embodiments of the present invention, examples of which are illustrated in the accompanying drawings.
A method and apparatus for coding an audio signal according to the present invention will be described with reference to the annexed drawings. The present invention aims to reduce the number of calculations required in the FFT process for performing the Psychoacoustic model process of the MPEG-4 AAC algorithm.

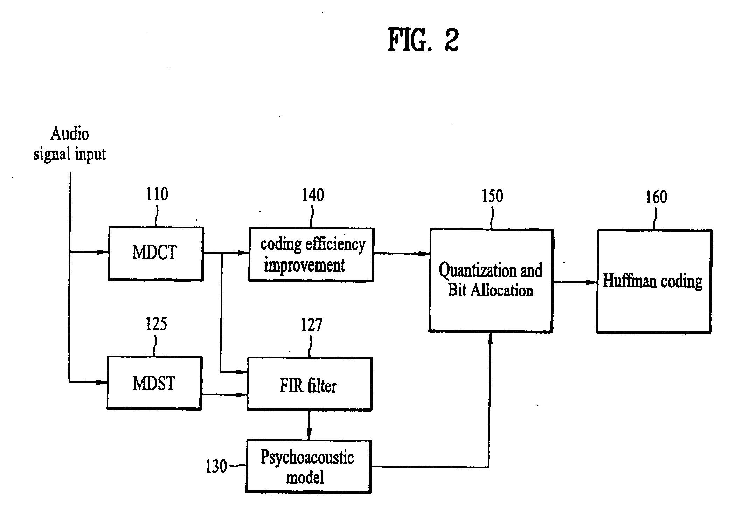

FIG. 2 is a block diagram illustrating an audio coding apparatus in accordance with a one embodiment of the present invention. As illustrated in FIG. 2, the audio coding apparatus according to the present invention includes an MDCT block 110, a Modified Discrete Sine Transform (MDST) block 125, a Finite Impulse Response (FIR) filter 127, a Psychoacoustic model block 130, a coding efficiency improvement block 140, a Quantization and Bit Allocation block 150 and a Huffman coding block 160.
The MDCT block 110 receives a time-domain audio signal and transforms the received audio signal into a frequency-domain signal in order to perform the coding process. The MDST block 125 performs an MDST on the received time-domain audio signal. The FIR filter 127 performs a primary FIR filtering and transmits the FIR-filtering result to the Psychoacoustic model block 130. The Psychoacoustic model block 130 analyzes perceptual characteristics of the audio signal and determines a maximum allowable quantization noise amount for each frequency of the analyzed audio signal. The Psychoacoustic model block 130 uses the transform result of the MDCT block 110, the transform result of the MDST block 125 and the filtering result of the FIR filter 127.
The Psychoacoustic model block 130 must use coefficients obtained as an FFT result. Therefore, if the FIR filter 127 performs the primary FIR filtering on the combination of the transform result of the MDCT block 110 and the transform result of the MDST block 125, and the primary FIR filtering result corresponds to the FFT result associated with the received audio signal, coding performance is not affected by the primary FIR filtering result. Equation 1 illustrates this.
**[Equation 1]**

$$FFT\{x(n)\} = \left[(X_c(k) - jX_s(k)) \bullet \exp(j\frac{2\pi}{N}n_0k)\right] * FFT\left\{\exp(j\frac{2\pi}{N}k_0n)\right\}$$

With reference to Equation 1, $x(n)$ represents an input audio signal, $FFT\{x(n)\}$ represents the FFT result of the input audio signal, $Xc(k)$ represents the transform result of the MDCT block 110, $Xs(k)$ represents the transform result of the MDST block 125 and $n_0$ and $k_0$ represent constants for use in the MDCT block. Additionally, symbol (*) represents a circular convolution, the character (n) represents a sample index of the input audio signal, the character (k) represents a frequency index, the character (N) represents window length of a transform window and exp $(j\frac{2\pi}{N}n_0k)$ represents the n0 shifting result.

The audio coding apparatus further includes a shifting block (not shown) for shifting the combination of the transform results of the MDCT block 110 and the MDST block 125 by a predetermined value. The shifting block performs $n_0$ shifting.

The FIR filter 127 performs the primary FIR filtering on the output signal of the shifting block and transmits the FIR filtering result to the Psychoacoustic model block 130. The MOST block 125 and the FIR filter 127 obtain the above-mentioned FFT result.

As illustrated in Equation 1, the combination of the MDCT result and the MDST result of the input audio signal is calculated and the circular convolution of calculated combination result is obtained. However, since the circular convolution greatly affects the number of calculations, the present invention performs an approximation process using the primary FIR filtering generated by the FIR filter 127 to reduce the number of circular convolution calculations. In other words, the primary FIR filtering generated by the FIR filter 127 performs the approximation of a plurality of circular convolution calculations.

At the same time, a window applied to the input audio signal for the FFT is different from a window applied to the input audio signal for the MDCT. Considering the different windows applied to the FFT and the MDCT, Equation 1 is transformed into Equation 2. Equation 2 is obtained by applying a Hann window to Equation 1 and compensates for different windows applied to individual input audio signals of the FFT and the MDCT.

**[Equation 2]**

$$FFT\{x(n)h_H(n)\} = FFT\left\{x(n)h_s(n) \bullet \frac{h_H(n)}{h_s(n)}\right\}$$

$$= \left[(X_c(k) - jX_s(k)) \bullet \exp(j\frac{2\pi}{N}n_0k)\right] * FFT\left\{\exp(j\frac{2\pi}{N}k_0n)\frac{h_H(n)}{h_s(n)}\right\}$$

In Equation 2, $h_s(n)$ represents a sine window for use in the MDCT and $hH(n)$ represents a Hann window used primarily for the Psychoacoustic model input process. The primary FIR filtering must perform the approximation in order to reduce the number of circular convolution calculations, as illustrated in Equation 2.

A right term of the circular convolution shown in FIG. 2 has a constant value(s) associated with a frequency index (k), such that the constant values are implemented in the form of a table. The FIR filtering result, which is the output signal or the primary FIR filtering result of the FIR filter 12, can be represented by Equation 3:

[Equation 3]
$$\sum_{i=0}^{1} a_i \, t[k-i]$$

In Equation 3, $t(k)$ is denoted by $t(k) = \left[ (X_c(k) - jX_s(k)) \bullet \exp(j\frac{2\pi}{N} n_0 k) \right]$ , $a_0$ represents a first coefficient value of the $FFT\left\{ \exp(j\frac{2\pi}{N} k_0 n) \right\}$ and $a_1$ represents a second coefficient value of the $FFT\left\{ \exp(j\frac{2\pi}{N} k_0 n) \right\}$ .

The coding efficiency improvement block 140 is composed of a plurality of components prescribed in the MPEG-4 AAC standard and improves coding (i.e., compression) efficiency according to signal characteristics. The components in the coding efficiency improvement block 140 are a TNS (Temporal Noise Shaping) component, a Joint Stereo component, a LTP (Long Term Prediction) component and a PNS (Perceptual Noise Suppression).

The Quantization and Bit Allocation block 150, which is defined in the MPEG-4 AAC standard, performs quantization and bit allocation on the received signal. The quantization process minimizes an amount of noise perceived by a human being in consideration of both an SNR (Signal-to-Noise Ratio) associated with an output signal of the coding efficiency improvement block 140 and an output value of the Psychoacoustic model block 130. Additionally, bit allocation is optimized, such that the SNR associated with the output signal of the coding efficiency improvement block 140 is less than the maximum allowable quantization noise amount of the output value of the Psychoacoustic model block 130 according to the optimized bit allocation.

The Huffman coding block 160 allows the output signal of the Quantization and Bit Allocation block 150 to be coded without any loss.

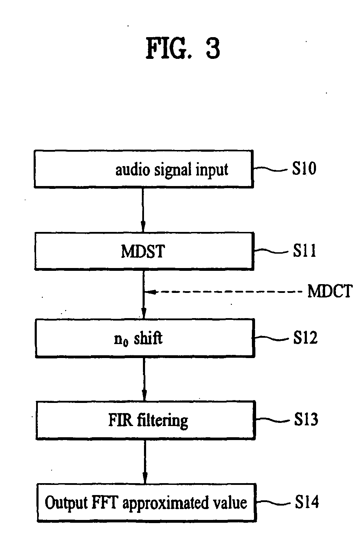

FIG. 3 is a flow chart illustrating a Psychoacoustic model process capable of coding an audio signal according to the present invention. As illustrated in FIG. 3, a time-domain audio signal received in the audio coding apparatus at step S10 is assumed to be equal to 2048 samples.

The audio signal is transformed into another signal by the MDST block 125 at step S11. The MDCT block 127 transforms the input audio signal into a frequency-domain audio signal and the transform result is combined with the MDST transform result, such that the combination result $X_c(k)$-$jXs(k)$ is acquired.

The combination result $X_c(k)$-$jXs(k)$ is successively multiplied by a specific value $\exp\left(j\frac{2\pi}{N} n_0 k\right)$ as illustrated in Equation 1. In other words, the combination of the two transform results is shifted by a predetermined value of n0 at step S12 and a spectrum is moved on a time axis by a predetermined value equal to the n0 shift.

The primary FIR filtering is performed on the n0 shift result at step S13. The FIR filtering result is acquired when the input audio signal approximates the FFT result.

The present invention does not apply a plurality of coefficients calculated by the FFT result to the Psychoacoustic model, but rather uses only first and second coefficients of the FFT result. In other words, the primary FIR filtering result is equal to the FFT-approximated value. The Psychoacoustic model block 130 uses the FFT-approximated value at step S14.

At the same time, the present invention performs the aforementioned approximation to substitute for the FFT result, thereby resulting in the occurrence of unexpected errors. However, the errors do not greatly affect the audio coding process.

A predetermined number $N^*(\log 2N+1)/4$ of real-number multiplications and a predetermined number of $N^*(\log 2N-1)/4$ are required to calculate a high-speed MDST associated with N samples. The number of multiplications required for the n0 shifting process is 3N/2 and the number of additions required for the n0 shifting process is 3N/2. The number of multiplications required for the FIR filtering process is 3N and the number of additions required for the FIR filtering process is 7N/2.

Therefore, the total number of multiplication/addition calculations for the Psychoacoustic model is denoted by $N^*\log 2N+19N/2$. The number of calculations required for a general FFT is denoted by $4N^*(\log 2N-1)+8$.

Therefore, assuming that the FFT process is associated with input audio signals composed of 2048 samples, the number of calculations required for the FIR filtering according to the present invention occupies about 51% of the number of calculations required for the FFT process. Therefore, the present invention can considerably reduce the total number of calculations for an audio coding process.

**Claims**

1. An audio coding apparatus comprising:

   a Modified Discrete Cosine Transform (MDCT) block (110) adapted to perform an MDCT process on a time-domain audio signal, thereby transforming it into a frequency-domain audio signal;
   a Psychoacoustic model block (130) adapted to determine a maximum allowable quantization noise amount for each frequency using a transform result received from the MDCT block;
   a Modified Discrete Sine Transform (MDST) block (125) adapted to perform an MDST process on the time-domain audio signal;
   a shifting block adapted to shift a combination of the transform result of the MDCT block and the transform result of the MDST block by a predetermined value;
   a Finite Impulse Response (FIR) filter (127) adapted to perform primary FIR filtering on the output result of the shifting block and provide the Psychoacoustic model block (130) with a result of the FIR filtering;

   wherein the FIR filter is further adapted to obtain a filtering result corresponding to a first coefficient and a second coefficient of a Fast Fourier Transform (FFT) result associated with the audio signal;
   wherein the FFT result is represented by a first equation

   $$FFT\{x(n)\} = \left[ (X_c(k) - jX_s(k)) \bullet \exp(j\frac{2\pi}{N}n_0 k) \right] * FFT\left\{ \exp(j\frac{2\pi}{N}k_0 n) \right\}$$ formed by the transform result of the MDCT block (110) and the transform result of the MDST block (125),
   wherein the symbol * denotes a circular convolution calculated using a primary FIR filtering generated by the FIR filter (127), $x(n)$ represents an input audio signal, $FFT\{x(n)\}$ represents an FFT result of the input audio signal, FFT denotes Fast Fourier Transform $X_c(k)$ represents the transform result of the MDCT block (110), $X_s(k)$ represents the transform result of the MDST block (125), $n_0$ and $k_0$ represent constants for use in the MDCT block, $n$ represents a sample index of the input audio signal, $N$ represents a window length of a transform window and $(X_c(k) - j \cdot X_s(k))$

   $\cdot \exp\left(j\frac{2\pi}{N}n_0 k\right)$ represents the output result of the shifting block;

   wherein the output result of the FIR filter (127) is calculated according to a second equation $\sum_{i=0}^{1} a_i t[k-i]$ and

   is equal to the primary FIR filtering result,

   wherein $a_0$ represents a first coefficient value of the $FFT\left\{\exp(j\frac{2\pi}{N}k_0 n)\right\}$, $a_1$ represents a second coefficient value of the

   $$t(k) = \left[ (X_c(k) - jX_s(k)) \bullet \exp(j\frac{2\pi}{N}n_0 k) \right]$$ and $t(k)$ is denoted by

   $$t(k) = \left[ (X_c(k) - jX_s(k)) \bullet \exp(j\frac{2\pi}{N}n_0 k) \right].$$

2. The apparatus according to claim 1, wherein the first equation represents the FFT result using a Hann window when a window of the FFT is different from a window of the MDCT.

3. The apparatus according to claim 1, wherein the first equation, representing the FFT result and to which a Hann window is applied, is changed to a third equation denoted by:

$$FFT\{x(n)h_H(n)\} = FFT\left\{x(n)h_s(n) \bullet \frac{h_H(n)}{h_s(n)}\right\}$$

$$= \left[(X_c(k) - jX_s(k)) \bullet \exp(j\frac{2\pi}{N}n_0k)\right] * FFT\left\{\exp(j\frac{2\pi}{N}k_0n)\frac{h_H(n)}{h_s(n)}\right\}$$

wherein $h_H$ denotes the Hann window and $h_s$ denotes a sine window,
such that the third equation compensates for different windows applied to the FFT and the MDCT block.

4. An audio coding method comprising:

transforming an input time-domain audio signal into a frequency-domain audio signal using a Modified Discrete Cosine Transform (MDCT);
transforming (S11) the input time-domain audio signal using a Modified Discrete Sine Transform (MDST);
shifting (S12) a combination of the transform result of the MDCT and the transform result of the MDST by a predetermined values, thereby giving a shifted result;;
performing (S13) a Finite Impulse Response (FIR) filtering on the shifted result;
determining a maximum allowable quantization noise amount for each frequency by applying the filtering result to a Psychoacoustic model;

wherein the filtering result corresponds to a first coefficient and a second coefficient of a Fast Fourier Transform (FFT) result associated with the input audio signal;
wherein the FFT result is represented by a first equation

$$FFT\{x(n)\} = \left[(X_c(k) - jX_s(k)) \bullet \exp(j\frac{2\pi}{N}n_0k)\right] * FFT\left\{\exp(j\frac{2\pi}{N}k_0n)\right\}$$ formed by the transform result of the MDCT and the transform result of the MDST,
wherein the symbol * denotes a circular convolution calculated using primary FIR filtering, $x(n)$ represents an input audio signal, $FFT\{x(n)\}$ represents an FFT result of the input audio signal, FFT represents Fast Fourier Transform, $X_c(k)$ represents the transform result of the MDCT, $X_s(k)$ represents the transform result of the MDST, $n_0$ and $k_0$ represent constants for use in the MDCT, $n$ represents a sample index of the input audio signal, $N$ represents a window length of a transform window and $(X_c(k) - j X_s(k)) \bullet \exp\left(j\frac{2\pi}{N}n_0k\right)$ represents the shifted result;

wherein the output result of the FIR filter is calculated according to a second equation $\sum_{i=0}^{1} a_i \, t[k-i]$ and is

equal to the primary FIR filtering result,

wherein $a_0$ represents a first coefficient value of the $FFT\left\{\exp(j\frac{2\pi}{N}k_0n)\right\}$ , $a_1$ represents a second coefficient value of the

$FFT\left\{\exp(j\frac{2\pi}{N}k_0n)\right\}$ and $t(k)$ is denoted by $t(k) = \left[(X_c(k) - jX_s(k)) \bullet \exp(j\frac{2\pi}{N}n_0k)\right]$ .

5. The method according to claim 4, wherein the first equation represents the FFT result using a Hann window when a window of the FFT is different from a window of the MDCT.

6. The method according to claim 4, wherein the first equation, representing the FFT result and to which a Hann window is applied, is changed to a third equation denoted by:

$$FFT\{x(n)h_H(n)\} = FFT\left\{x(n)h_s(n) \bullet \frac{h_H(n)}{h_s(n)}\right\}$$

$$= \left[(X_c(k) - jX_s(k)) \bullet \exp(j\frac{2\pi}{N}n_0k)\right] * FFT\left\{\exp(j\frac{2\pi}{N}k_0n)\frac{h_H(n)}{h_s(n)}\right\}$$

wherein $h_H$ denotes the Hann window and $h_s$ denotes a sine window,
such that the third equation compensates for different windows applied to the FFT and the MDCT block.

**Patentansprüche**

1. Audiocodiervorrichtung, umfassend:

- einen Block (110) für eine modifizierte diskrete Kosinustransformation (MDCT), welcher dazu ausgelegt ist, einen MDCT-Prozess an einem Audiozeitsignal durchzuführen und dieses hierdurch in ein Audiofrequenzsignal zu transformieren;
- einen Block (130) mit einem psychoakustischen Modell, welcher dazu ausgelegt ist, unter Verwendung eines von dem MDCT-Block erhaltenen Transformationsresultats eine maximal zulässige Quantisierungsrauschhöhe für jede Frequenz zu ermitteln,
- einen Block (125) für eine modifizierte diskrete Sinustransformation (MDST), welcher dazu ausgelegt ist, an dem Audiozeitsignal einen MDST-Prozess durchzuführen,
- einen Verschiebungsblock, welcher dazu ausgelegt ist, eine Kombination des Transformationsresultats des MDCT-Blocks und des Transformationsresultats des MDST-Blocks um einen vorbestimmten Wert zu verschieben,
- ein FIR-Filter (127) mit endlicher Impulsantwort, welches dazu ausgelegt ist, eine primäre FIR-Filterung an dem Ausgaberesultat des Verschiebungsblocks durchzuführen und den das psychoakustische Modell enthaltenden Block (130) mit einem Resultat der FIR-Filterung zu speisen,

wobei das FIR-Filter ferner dazu ausgelegt ist, ein Filterungsresultat zu erhalten, das einem ersten Koeffizienten und einem zweiten Koeffizienten eines dem Audiosignal zugeordneten Ergebnisses einer schnellen Fourier-Transformation (FFT) entspricht,
wobei das FFT-Ergebnis durch eine von dem Transformationsresultat des MDCT-Blocks (110) und dem Transformationsresultat des MDST-Blocks (125) gebildete erste Gleichung

$$FFT\{x(n)\} = \left[(X_c(k) - jX_s(k)) \bullet \exp(j\frac{2\pi}{N}n_0k)\right] * FFT\left\{\exp(j\frac{2\pi}{N}k_0n)\right\}$$

dargestellt ist,
wobei das Symbol * eine zirkulare Faltung bezeichnet, die unter Verwendung einer mittels des FIR-Filters (127) bewirkten primären FIR-Filterung berechnet wird, x(n) ein eingangsseitiges Audiosignal darstellt, FFT{x(n)} ein FFT-Ergebnis für das eingangsseitige Audiosignal darstellt, wobei FFT die schnelle Fourier-Transformation bezeichnet, $X_c(k)$ das Transformationsresultat des MDCT-Blocks (110) darstellt, $X_s(k)$ das Transformationsresultat des MDST-Blocks (125) darstellt, $n_0$ und $k_0$ Konstanten zur Verwendung in dem MDCT-Block darstellen, n einen Abtastindex für das eingangsseitige Audiosignal darstellt, N die Fensterlänge eines Transformationsfensters darstellt und ($X_c$

(k) - j $\bullet$ $X_s$(k)) $\bullet$ exp $\left(j\frac{2\pi}{N}n_0 k\right)$ das ausgegebene Resultat des Verschiebungsblocks darstellt,

wobei das ausgegebene Resultat des FIR-Filters (127) gemäß einer zweiten Gleichung $\sum_{i=0}^{1} a_i \, t[k-i]$

berechnet wird und gleich dem Resultat der primären FIR-Filterung ist,
wobei $a_0$ einen ersten Koeffizientenwert von

$$FFT\left\{\exp(j\frac{2\pi}{N}k_0 n)\right\}$$ darstellt, $a_1$ einen zweiten Koeffizientenwert von

$$FFT\left\{\exp(j\frac{2\pi}{N}k_0 n)\right\}$$ darstellt und t(k) durch

$$t(k) = \left[(X_c(k) - jX_s(k)) \bullet \exp(j\frac{2\pi}{N}n_0 k)\right]$$ gegeben ist.

2. Vorrichtung nach Anspruch 1, wobei die erste Gleichung das FFT-Ergebnis bei Verwendung eines Hann-Fensters darstellt, wenn sich das Fenster der FFT vom Fenster der MDCT unterscheidet.

3. Vorrichtung nach Anspruch 1, wobei sich die das FFT-Ergebnis darstellende erste Gleichung bei Anwendung eines Hann-Fensters in eine dritte Gleichung ändert, die durch:

$$FFT\{x(n)h_H(n)\} = FFT\left\{x(n)h_s(n) \bullet \frac{h_H(n)}{h_s(n)}\right\}$$

$$= \left[(X_c(k) - jX_s(k)) \bullet \exp(j\frac{2\pi}{N}n_0 k)\right] * FFT\left\{\exp(j\frac{2\pi}{N}k_0 n)\frac{h_H(n)}{h_s(n)}\right\}$$

gegeben ist, wobei $h_H$ das Hann-Fenster bezeichnet und $h_s$ ein Sinus-Fenster bezeichnet, derart, dass die dritte Gleichung unterschiedliche in dem FFT- und dem MDCT-Block angewendete Fenster kompensiert.

4. Audiocodierverfahren, umfassend:

- Transformieren eines eingangsseitigen Audiozeitsignals in ein Audiofrequenzsignal unter Anwendung einer modifizierten diskreten Kosinustransformation (MDCT),
- Transformieren (S11) des eingangsseitigen Audiozeitsignals unter Anwendung einer modifizierten diskreten Sinustransformation (MDST),
- Verschieben (S12) einer Kombination des Transformationsresultats der MDCT und des Transformationsresultats der MDST um einen vorbestimmten Wert, um hierdurch ein verschobenes Resultat bereitzustellen,
- Durchführen (S13) einer FIR-Filterung mit endlicher Impulsantwort an dem verschobenen Resultat,
- Ermitteln einer maximal zulässigen Quantisierungsrauschhöhe für jede Frequenz durch Anlegen des Filterungsresultats an ein psychoakustisches Modell,

wobei das Filterungsresultat einem ersten Koeffizienten und einem zweiten Koeffizienten des Ergebnisses einer dem eingangsseitigen Audiosignal zugeordneten schnellen Fourier-Transformation (FFT) entspricht,
wobei das FFT-Ergebnis durch eine von dem Transformationsresultat der MDCT und dem Transformationsresultat der MDST gebildete erste Gleichung

$$FFT\{x(n)\} = \left[(X_c(k) - jX_s(k)) \bullet \exp(j\frac{2\pi}{N}n_0 k)\right] * FFT\left\{\exp(j\frac{2\pi}{N}k_0 n)\right\}$$

dargestellt ist,

wobei das Symbol * eine zirkulare Faltung bezeichnet, die unter Verwendung einer primären FIR-Filterung berechnet wird, x(n) ein eingangsseitiges Audiosignal darstellt, FFT{x(n)} ein FFT-Ergebnis für das eingangsseitige Audiosignal darstellt,

wobei FFT die schnelle Fourier-Transformation bezeichnet, $X_c(k)$ das Transformationsresultat der MDCT darstellt, $X_s(k)$ das Transformationsresultat der MDST (125) darstellt, $n_0$ und $k_0$ Konstanten zur Verwendung bei der MDCT darstellen, n einen Abtastindex für das eingangsseitige Audiosignal darstellt, N die Fensterlänge eines Transformationsfensters darstellt und $(X_c(k) - j \cdot X_s(k)) \cdot \exp(j \frac{2\pi}{N} n_0 k)$ das verschobene Resultat darstellt,

wobei das ausgegebene Resultat des FIR-Filters gemäß einer zweiten Gleichung $\sum_{i=0}^{1} a_i \, t[k-i]$

berechnet wird und gleich dem Resultat der primären FIR-Filterung ist,

wobei $a_0$ einen ersten Koeffizientenwert von

$$FFT\left\{\exp(j\frac{2\pi}{N}k_0 n)\right\}$$

darstellt, $a_1$ einen zweiten Koeffizientenwert von

$$FFT\left\{\exp(j\frac{2\pi}{N}k_0 n)\right\}$$

darstellt und t(k) durch

$$t(k) = \left[(X_c(k) - jX_s(k)) \cdot \exp(j\frac{2\pi}{N}n_0 k)\right]$$

gegeben ist.

5. Verfahren nach Anspruch 4, wobei die erste Gleichung das FFT-Ergebnis bei Verwendung eines Hann-Fensters darstellt, wenn sich das Fenster der FFT vom Fenster der MDCT unterscheidet.

6. Verfahren nach Anspruch 4, wobei sich die das FFT-Ergebnis darstellende erste Gleichung bei Anwendung eines Hann-Fensters in eine dritte Gleichung ändert, die durch:

$$FFT\{x(n)h_H(n)\} = FFT\left\{x(n)h_s(n) \cdot \frac{h_H(n)}{h_s(n)}\right\}$$

$$= \left[(X_c(k) - jX_s(k)) \cdot \exp(j\frac{2\pi}{N}n_0 k)\right] * FFT\left\{\exp(j\frac{2\pi}{N}k_0 n)\frac{h_H(n)}{h_s(n)}\right\}$$

gegeben ist, wobei $h_H$ das Hann Fenster bezeichnet und $h_s$ ein Sinus-Fenster bezeichnet, derart, dass die dritte Gleichung unterschiedliche in dem FFT- und dem MDCT-Block angewendete Fenster kompensiert.

**Revendications**

1. Appareil de codage audio comprenant :

un bloc de transformée en cosinus discrète modifiée (MDCT) (110) adapté pour réaliser un processus MDCT sur un signal audio de domaine de temps, le transformant ainsi en un signal audio de domaine de fréquence ;
un bloc de modèle psychoacoustique (130) adapté pour déterminer une quantité de distorsion de quantification autorisable maximum pour chaque fréquence en utilisant un résultat de la transformée reçu du bloc MDCT ;
un bloc de transformée en sinus discrète modifiée (MDST) (125) adapté pour réaliser un processus MDST sur le signal audio de domaine de temps ;

un bloc de décalage adapté pour décaler une combinaison du résultat de la transformée du bloc MDCT et du résultat de la transformée du bloc MDST par une valeur prédéterminée ;

un filtre non récursif (FIR) (127) adapté pour réaliser un filtrage FIR primaire sur le résultat de sortie du bloc de décalage et fournir au bloc de modèle psychoacoustique (130) un résultat du filtrage FIR ;

dans lequel le filtre FIR est en outre adapté pour obtenir un résultat de filtrage correspondant à un premier coefficient et à un deuxième coefficient du résultat de la transformation de Fourier rapide (FFT) associé au signal audio ;

dans lequel le résultat FFT est représenté par une première équation

$$FFT\{x(n)\} = \left[ (X_c(k) - jX_s(k)) \bullet \exp\left( j\frac{2\pi}{N} n_0 k \right) \right] * FFT\left\{ \exp\left( j\frac{2\pi}{N} k_0 n \right) \right\}$$

formée par le résultat de la transformée du bloc MDCT (110) et le résultat de la transformée du bloc MDST (125), dans laquelle le symbole * indique une convolution circulaire calculée en utilisant un filtrage FIR primaire généré par le filtre FIR (127), $x(n)$ représente un signal audio d'entrée, $FFT\{x(n)\}$ représente un résultat FFT du signal audio d'entrée, FFT indique la transformation de Fourier rapide, $X_c(k)$ représente le résultat de la transformée du bloc MDCT (110), $X_s(k)$ représente le résultat de la transformée du bloc MDST (125), $n_0$ et $k_0$ représentent les constantes pour une utilisation dans le bloc MDCT, $n$ représente un indice d'échantillon du signal audio d'entrée, $N$ représente une longueur de fenêtre d'une fenêtre de la transformée et

$$\left( X_c(k) - jX_s(k) \right) \bullet \exp\left( j\frac{2\pi}{N} n_0 k \right)$$ représente le résultat de sortie du bloc de décalage ;

dans lequel le résultat de sortie du filtre FIR (127) est calculé en fonction d'une deuxième équation $\sum_{i=0}^{1} a_1 t[k-i]$ et est égal au résultat du filtrage FIR primaire,

dans lequel $a_0$ représente une première valeur de coefficient de

$$FFT\left\{ \exp\left( j\frac{2\pi}{N} k_0 n \right) \right\},\ a_1 \text{ représente une deuxième valeur de coefficient de}$$

$$FFT\left\{ \exp\left( j\frac{2\pi}{N} k_0 n \right) \right\} \text{ et } t(k) \text{ est indiqué par } t(k) = \left[ (X_c(k) - jX_s(k)) \bullet \exp\left( j\frac{2\pi}{N} n_0 k \right) \right].$$

2. Appareil selon la revendication 1, dans lequel la première équation représente le résultat FFT utilisant une fenêtre Hann lorsqu'une fenêtre de la FFT est différente d'une fenêtre de la MDCT.

3. Appareil selon la revendication 1, dans lequel la première équation, représentant le résultat FFT et auquel une fenêtre Hann est appliquée, est changée en une troisième équation indiquée par :

$$FFT\{x(n)h_H(n)\} = FFT\left\{ x(n)h_s(n) \bullet \frac{h_H(n)}{h_s(n)} \right\}$$

$$= \left[ (X_c(k) - jX_s(k)) \bullet \exp\left( j\frac{2\pi}{N} n_0 k \right) \right] * FFT\left\{ \exp\left( j\frac{2\pi}{N} k_0 n \right) \frac{h_H(n)}{h_s(n)} \right\}$$

dans laquelle $h_H$ indique la fenêtre Hann et $h_s$ indique une fenêtre de sinus, de telle manière que la troisième équation compense les différentes fenêtres appliquées à la FFT et au bloc MDCT.

4. Procédé de codage audio comprenant :

transformer un signal audio d'entrée de domaine de temps en un signal audio de domaine de fréquence en utilisant une transformée en cosinus discrète modifiée (MDCT) ;
transformer (S11) le signal audio d'entrée de domaine de temps en utilisant une transformée en sinus discrète modifiée (MDST) ;
décaler (S12) une combinaison du résultat de la transformée de la MDCT et du résultat de la transformée de la MDST par une valeur prédéterminée, donnant ainsi un résultat décalé ;
réaliser (S13) un filtrage de filtre non récursif (FIR) sur le résultat décalé ; déterminer une quantité de distorsion de quantification autorisable maximum pour chaque fréquence en appliquant le résultat de filtrage à un modèle psychoacoustique ;

dans lequel le résultat de filtrage correspond à un premier coefficient et à un deuxième coefficient d'un résultat de la transformation de Fourier rapide (FFT) associé au signal audio d'entrée ;
dans lequel le résultat FFT est représenté par une première équation

$$FFT\{x(n)\} = \left[ \left( X_c(k) - jX_s(k) \right) \bullet \exp\left( j\frac{2\pi}{N} n_0 k \right) \right] * FFT\left\{ \exp\left( j\frac{2\pi}{N} k_0 n \right) \right\}$$

formée par le résultat de la transformée de la MDCT et le résultat de la transformée de la MDST,
dans lequel le symbole * indique une convolution circulaire calculée en utilisant un filtrage FIR primaire, $x(n)$ représente un signal audio d'entrée, $FFT\{x(n)\}$ représente un résultat FFT du signal audio d'entrée, FFT représente une transformation de Fourier rapide, $X_c(k)$ représente le résultat de la transformée de la MDCT, $X_s(k)$ représente le résultat de la transformée de la MDST, $n_0$ et $k_0$ représentent les constantes pour une utilisation dans la MDCT, $n$ représente un indice d'échantillon du signal audio d'entrée, $N$ représente une longueur de fenêtre d'une fenêtre de la transformée et $\left( X_c(k) - jX_s(k) \right) \bullet \exp\left( j\frac{2\pi}{N} n_0 k \right)$ représente le résultat décalé ;

dans lequel le résultat de sortie du filtre FIR est calculé en fonction d'une deuxième équation $\sum_{i=0}^{1} a_i t[k-i]$ et est égal au résultat du filtrage FIR primaire,
dans lequel $a_0$ représente une première valeur de coefficient de

$$FFT\left\{ \exp\left( j\frac{2\pi}{N} k_0 n \right) \right\},$$ $a_1$ représente une deuxième valeur de coefficient de

$$FFT\left\{ \exp\left( j\frac{2\pi}{N} k_0 n \right) \right\}$$ et $t(k)$ est indiqué par $t(k) = \left[ \left( X_c(k) - jX_s(k) \right) \bullet \exp\left( j\frac{2\pi}{N} n_0 k \right) \right].$

5. Procédé selon la revendication 4, dans lequel la première équation représente le résultat FFT utilisant une fenêtre Hann lorsqu'une fenêtre de la FFT est différente d'une fenêtre de la MDCT.

6. Procédé selon la revendication 4, dans lequel la première équation, représentant le résultat FFT et auquel une fenêtre Hann est appliquée, est changée en une troisième équation indiquée par :

$$FFT\{x(n)h_H(n)\} = FFT\left\{ x(n)h_s(n) \bullet \frac{h_H(n)}{h_s(n)} \right\}$$

$$= \left[ \left( X_c(k) - jX_s(k) \right) \bullet \exp\left( j\frac{2\pi}{N} n_0 k \right) \right] * FFT\left\{ \exp\left( j\frac{2\pi}{N} k_0 n \right) \frac{h_H(n)}{h_s(n)} \right\}$$

dans laquelle $h_H$ indique la fenêtre Hann et $h_s$ indique une fenêtre de sinus, de telle manière que la troisième équation compense les différentes fenêtres appliquées à la FFT et au bloc MDCT.

## FIG. 1
## Prior Art

# FIG. 2

Audio
signal input

# FIG. 3

```
┌─────────────────────────────┐
│      audio signal input     │── S10
└─────────────────────────────┘
              │
              ▼
┌─────────────────────────────┐
│            MDST             │── S11
└─────────────────────────────┘
              │
              │  ◄------------------- MDCT
              ▼
┌─────────────────────────────┐
│          n₀ shift           │── S12
└─────────────────────────────┘
              │
              ▼
┌─────────────────────────────┐
│         FIR filtering       │── S13
└─────────────────────────────┘
              │
              ▼
┌─────────────────────────────┐
│ Output FFT approximated value│── S14
└─────────────────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MANU MATHEW et al.** Modified MP3 Encoder using Complex Modified Discrete Cosine Transform. *ICME 2003,* 2003, II-709 II-712